# EUROPEAN PATENT APPLICATION

(11) **EP 0 622 439 A1**
(43) Date of publication of application: **02.11.1994**
(21) Application number: 94201003.4
(22) Date of filing: 13.04.1994
(51) Int. Cl.: C09K 11/00, C09K 11/57, H05B 33/14, H05B 33/18, H05B 33/20

(54) **Quantum sized activator doped semiconductor particles**

(30) Priority: 20.04.1993 US 50693; 21.04.1993 US 51118
(71) Applicant: Philips Electronics N.V., 5621 BA Eindhoven (NL)
(72) Inventor: Bhargava, Rameshwar, NL-5656 AA Eindhoven (NL); Gallagher, Dennis, NL-5656 AA Eindhoven (NL); Racz, Jacqueline, NL-5656 AA Eindhoven (NL)
(74) Representative: Koppen, Jan

(57) **Abstract**

Luminescent layer comprising activator doped semiconductor nanoparticles of a size (< 100Å) which exhibit quantum effects. The nanoparticles are grown and doped within a polymer matrix, or precipated and coated with a surfactant.

## Description

### BACKGROUND AND SUMMARY OF THE INVENTION

This invention relates to semiconductor materials and particularly to a layer of quantum sized activator doped semiconductor particles and to methods for manufacturing these particles.

By making semiconductor particles small enough to show quantum confinement effects and doping them with a luminescent activator element (referred to as "doped nanocrystals"), new optical properties are created which differ from those of chemically identical bulk material and from the quantum confined host material alone. An activator doped and quantum confined host material was made (ZnS:Mn) that demonstrates blue (shorter wavelengths) shift in the excitation wavelengths of the activator. These systems also display a dramatic decrease in the time for luminescence decay with an efficiency and brightness comparable to bulk (ZnS:Mn) phosphors. These new material characteristics indicate a fundamental change in optical properties and this is the first time materials exhibiting these characteristics have been made. The invention also relates to methods to produce this material and to other unique properties, such as reduced excitation voltages for (flat panel) cathode ray tubes.

It has been recognized that when the radius of a semiconductor crystallite is near that of the Bohr radius of the exciton, there is a quantum size effect and its electronic properties change. Most of the II-VI and some III-V and group IV semiconductors have been prepared as quantum sized particles and demonstrate quantum size effects in their physical properties. The size at which the particles demonstrate changes in their bandgap from the quantum size effects vary with the intrinsic electronic structure of the compound but typically appear when below 100 Å in diameter. To exhibit quantum size effects it is also necessary for the particles to remain isolated from one another, if allowed to aggregate the material exhibits bulk properties despite the small size of the individual particles.

Undoped quantum size particles have previously been prepared in several ways: spontaneous nucleation in solution, heterogeneous growth from a substrate material, growth within a micelle, growth in solution atop a carrier particle, nucleation in a sputtering chamber, and laser ablation. The present invention is directed towards the doping of a quantum sized semiconductor host material with an activator element which demonstrates new material properties.

Possible applications for new materials based on the concepts and materials described in this application include:
- Luminescent phosphors for use in cathode ray tubes and lights.
- Thin films for electroluminescent displays.
- Lasing phosphors.
- The use of luminescent activators and magnetic particles for magneto-optical recording and displays.
- Lower voltage phosphors for flat cathode ray tubes
- Markers for medical diagnosis
The present application also provides methods for manufacturing quantum sized doped semiconductor particles. The methodology is particularly advantageous in that it provides a relatively simple approach to the manufacture of doped quantum sized semiconductor particles at room temperature. Furthermore, the particles so produced may be dispersed within a polymer matrix and the reaction which forms the doped particles may take place in the polymer matrix. Thereafter, the polymer matrix maintains the doped particles separate from one another so that they maintain their quantum physical effects without agglomeration.

To maintain the separation for quantum confinement in precipitated particles, it is also desirable to add a material which coats the surface of the particles and provides a barrier to agglomeration. These molecules are commonly referred to as surface active agents - surfactants. The requirements of a surfactant for the present system are straightforward:
1. must be soluble in hydrocarbon solvents
2. must not participate in the chemical reactions to dope or form the ZnS
3. must have an ultraviolet absorption below the absorption edge of the host matrix (e.g. ZnS). This requirement may be ignored for long wavelength or non-optical applications.

It is the ultraviolet absorbance which excludes most Known surfactants, nevertheless it is believed that there are many molecules which could suffice. The surfactant preferably used in this invention is poly(methyl methacrylate) (PMMA) and its monomer, methacrylic acid. PMMA has been studied as a surfactant and has demonstrated both physical adsorption (thermodynamic driven) and chemical adsorption (hydrogen bonding with C=O group in polymer) onto oxide surfaces.

The doped nanocrystals produced by the present invention have a luminescent efficiency which is relatively high for films prepared at room temperature. Normally, thin films of bulk ZnS:Mn used in electroluminescent devices yield high efficiency when prepared above temperatures of 350°C. For powder phosphors, this temperature is frequently as high as 1000°C. However, high processing temperatures would change the morphology of quantum sized particles and destroy their properties. The new doped nanocrystals also emit light significantly faster (shorter luminescent decay time) than that observed with corresponding bulk material. This faster luminescent decay time in a nanocrystal provides advantage over bulk material for application where speed is important, i.e. faster phosphors for next generation TV's and displays. It is believed that this characteristic has not been observed before.

### BRIEF SUMMARY OF THE DRAWINGS

For a better understanding of the invention, reference is made to the following drawings which are to be taken in conjunction with the detailed specification to follow:
Figure 1 is a graph of UV absorption Avs. wavelength λ for doped nanoparticles made in accordance with the invention;
Figure 2 is a graph of intensity I of the photoluminescence of the dopant emission vs. wavelength λ for the doped nanoparticles;
Figure 3 is a graph showing the effect of UV curing on the intensity I of the luminescence of encapsulated doped nanoparticles;
Figure 4 is a graph of the luminescent decay of encapsulated doped nanoparticles.

### DETAILED DESCRIPTION OF THE PREFERRED EMBODIMENTS

The following illustrates the steps of a process for the preparation of (manganese) doped zinc sulphide quantum size particles.

The process begins at a step 1 wherein zinc chloride and manganese chloride are dissolved in water at room temperature. At this step a compound containing one of the components of the host and a compound containing the dopant are dissolved at room temperature in a suitable solvent, in this case water. The quantities used herein are 0.09 gram zinc chloride and 0.01 gram manganese chloride dissolved in 30 ml of distilled and de-ionized water, thus an extremely dilute solution of 2.2x10⁻² M (moles/liter) ZnCl₂ and 2.7x10⁻³M MnCl₂. Added to the dissolved solution at a step 2 is 1.35 grams of polyethylene oxide (-CH₂CH₂O-)ₙ powder (PEO)[avg. molecular weight 200,000]. The solution was stirred for several hours so as to allow the polyethylene oxide to fully dissolve. Thereafter at a step 3 the dissolved solution was cast onto a flat surface in the form of a glass plate. At a step 4 the cast solution was dried under flowing nitrogen. The drying step 4 can take place under air, however flowing nitrogen speeds the process and helps prevent crystallization of the PEO. After the drying is complete, at a step 5, the film (of approximate thickness of 1 mm) is peeled off of the glass plate and cut into suitable sized coupons and allowed to dry on both sides.

The coupons are thereafter ready to be placed in a reactive solution, again at room temperature, of a solvent at a step 6 which will dissolve a sulphur containing compound, but will not dissolve the PEO matrix. A suitable solvent is the hydrocarbon solvent cyclohexane (C₆H₁₂). The sulphur bearing compound is hexamethyldisilthian S(Si(CH₃)₃)₂ which will dissolve in the cyclohexane and which will diffuse through the PEO matrix and readily cleave off its sulphur. The coupon is left in the solution of step 6 for a period of days or weeks as the reaction proceeds slowly and the doped particles grow within the PEO matrix. The reaction will proceed to grow quantum sized manganese doped zinc sulphide particles. As an alternative to hexamethyldisilthian, hydrogen sulfide gas (H₂S) may be bubbled into the cyclohexane. After the reaction is complete at a step 7 the coupons are removed and dried in flowing nitrogen. The coupon remains intact but contained within its polymer matrix are the manganese doped zinc sulphide particles of approximately 20-100Å which have a doping % of Mn of 0.5-1.0%. The polyethylene matrix serves to prevent the particles from clumping together which will ruin the quantum effects.

The incorporation of a luminescing dopant in a nanocrystal yields characteristic emission of the dopant and high luminescent efficiency. For example, Mn in ZnS has a yellow orange emission while Tb doped in ZnS emits green. To obtain yellow orange emission in Mn doped ZnS, the film containing ZnS:Mn particles is excited with a wavelength of 300 nm. However, if the detector is kept at the yellow-orange wavelength and the wavelength of the exciting light is varied, the orange emission due to the Mn²⁺ activator, peaks when energy of the exciting light approaches the bandgap energy of the ZnS particle. The process of monitoring the luminescence using the emission associated with an external impurity is referred as the Photoluminescence excitation (PLE) method. For example the band gap of bulk ZnS is about 339 nm and from PLE measurements the bandgap obtained is 340 nm. Similarly for nanosized particles the bandgap energy has increased to about 310 nm and the peak of the excitation (PLE peak) is 309 nm. Thus with a simple technique of measuring PLE, one can obtain the bandgap of the nanocrystals. This permits the distinguishing of the contribution of the various size of particles to the total luminescent intensity. Besides obtaining the band gap, it can be demonstrated that the Mn ion is an integral part of the ZnS nanocrystal, because it is only excited via the ZnS bandgap. Since in nanocrystals the bandgap is size dependent, the PLE technique is useful to obtain the sizes and their distribution.

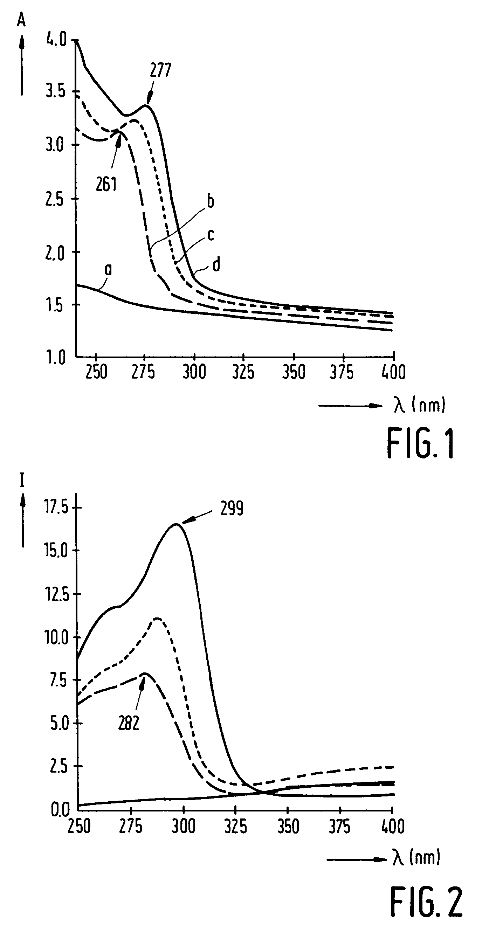

Figure 1 is a graph of ultraviolet (UV) absorption A plotted against wavelength (in nm) for doped nanoparticles grown for varying periods of time (i.e. the length of time the coupons are left in the reactive solution). As can be seen the unreacted solution (curve d) shows no peak across the wavelengths of interest. At 5 days of growth (curve b) a peak of 261 nm is seen and after 35 days of growth (curve d) a peak at 277 nm is shown. Curve c (21 days) is in between. This indicates that the bandgap narrows and the size of the particles increases as they are left in the reactive solution. Thus, the size of the particles may be readily adjusted by reaction time. Of course if the size becomes too large the quantum effects will diminish or become negligible. Figure 2 is a graph of photoluminescent excitation (I (arbitrary units) vs. wavelength λ (in nm) for the Mn²⁺ and again shows a shift towards peaks at longer wavelengths as a function of time in the reactive solution, increases which demonstrates the increasing size of the doped nanocrystals as the reaction progresses.

In this reaction, nitrates such as zinc nitrate, manganese nitrate and certain selected acetates may be utilized in a suitable solvent. Many other solvents could be substituted for the distilled water in the above-described methodology. It is only necessary that the solvent dissolve both the chemical compound containing the first component of the host, the compound containing the dopant and the PEO. Suitable alternative solvents are alcohol and methyl ethyl ketone. The molecular weight and the concentration of the PEO dissolved in the water is not extremely critical. It is only necessary that these parameters be adjusted so that the PEO will dry and that it can be peeled off in coupons so as to be placed in the reactive solution.

In addition to the manganese doping of zinc sulfide the present process is also suitable for doping zinc sulphide with terbium, the starting component is changed to TbCl₃. Additionally, other semiconductor host materials may also be prepared and doped with suitable activators. Such host materials may be zinc selinide (ZnSe) zinc telluride (ZnTe) cadmium sulfide (CdS) and cadmium selinide (CdSe) may also be utilized in similar reactions. Finally dopants such as copper, silver, thallium, cerium, chromium, titanium and other rare earth elements may be utilized.

An alternative process will be presented in hereinafter. The starting solution at a step a contains pure diethylzinc ((C₂H₅)₂Zn, CAS number [557-20-0]) dissolved in toluene (Anhydrous, C₆H₅CH₃, CAS no. [108-88-3]) so that the final reaction concentration of zinc is 5x10⁻³ M. The diethylzinc can also be obtained by a Grignard reaction. The surfactant, poly(methyl methacrylate) (medium molecular weight powder, approximately 145,000), [H₂C=C(CH₃)(COOCH₃)]ₙ, CAS no. [9011-14-7], (0.28g dissolved in 20 ml toluene)), is added to the diethylzinc solution at a step b. It takes approximately 12-18 hours for the PMMA to dissolve.

Separately, the diethylmanganese was prepared by the Grignard reaction of 1.3 ml of manganese chloride (MnCl₂, CAS no. [7773-01-5](0. 122g dissolved in 17ml tetrahydrofuran at a step c)) (anhydrous, C₄H₈O, CAS no. [109-99-9]) with 10 ml of ethylmagnesium chloride (2.0M solution in tetrahydrofuran, C₂H₅MgCl, CAS no. [2386-64-3], (diluted 1:100 in tetrahydrofuran at a step d)). This amount of manganese would correspond to approximately 10 atomic % if all manganese chloride was converted to diethylmanganese and all was incorporated in the ZnS. A stoichiometric excess of ethylmagnesium chloride is used to drive the reaction at a step e to completion. The reaction product is orange in colour but turns brown with time - as the diethylmanganese decomposes.

In another separate reaction at a step f, hydrogen sulfide gas (H₂S, gas, CAS no. [7783-06-4]) is bubbled through 23.72 ml of toluene for approximately 5 minutes and then stopped, this time is considered sufficient for the room temperature equilibrium concentration of hydrogen sulfide to be solubilized (approximately 6.32x10⁻⁴ moles/ml at 20°C). This provides a final concentration of sulfur to the reaction of 1x10⁻¹ M. Note that H₂S should not be bubbled into the reaction as bubbling H₂S directly into the reaction would cause non-quantum-sized particles to form on the bubbles at the gas/liquid interface. The precipitation occurred instantaneously at a step g when after the addition of the diethylmanganese solution to the previous solution of diethylzinc and PMMA, the solubilized hydrogen sulfide was also added at step f. The reaction is in evidence first by the observation of evolved gases (probably ethylene) from a bubbler attached to the reactor, and second by the change in the solution from transparent to translucent, a result of particle agglomeration into flocs large enough to scatter light. The precipitated particles are quantum sized (<100Å) ZnS:Mn coated with PMMA with a dopant concentration of 0.5-1.0%. After the precipitation the particles may be washed in any solvent suitable to remove reaction byproducts from the particles. At a step h the encapsulated particles are cured by UV exposure.

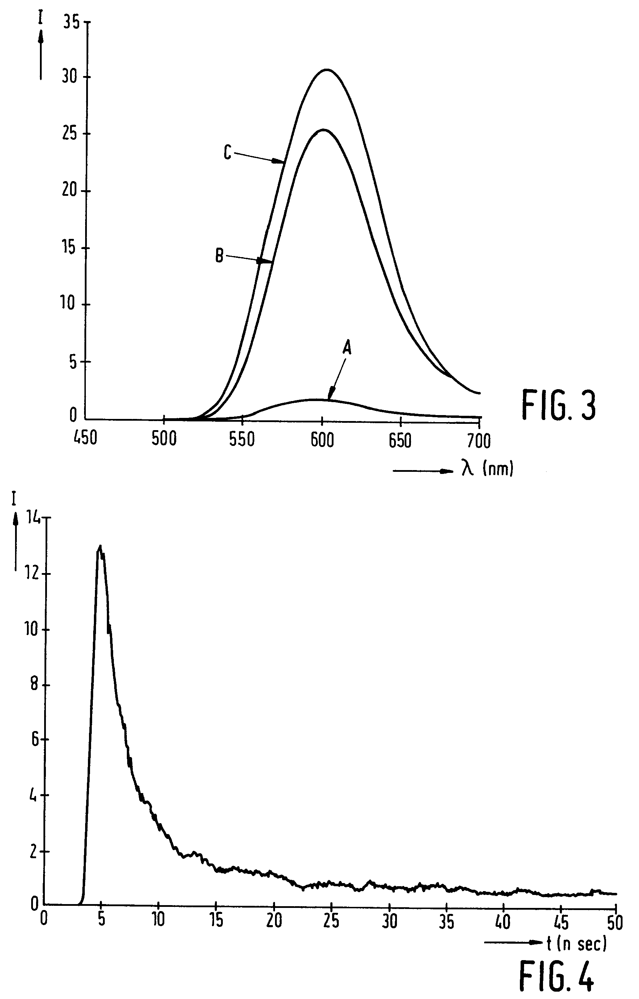

Another unique characteristic of this material is the effect of the surfactant, and the ultraviolet curing of the surfactant, on the light emission. The brightness was visibly improved when the precipitated particles were exposed to ultraviolet light (300 nm) over several minutes. Figure 3 demonstrates that after exposure the intensity I (arbitrary units) of the orange emission improves when all other experimental conditions are kept the same (curve A: no cure; curve B: 1.25 hr cure; curve C: 3.25 hr cure). The samples show a decreased rate of improvement with time. Bulk ZnS:Mn samples were similarly tested after coating with the same surfactant in toluene, settling and drying. In contrast, the luminescent intensity of the bulk ZnS:Mn decreases with exposure time.

These characteristics were also observed on samples in which ZnS quantum sized particles were doped with manganese and using methacrylic acid (H₂C=C(CH₃)COOH, CAS no. [79-41-4]) as the surfactant rather than poly(methyl methacrylate) polymer, and these characteristics have since been demonstrated in earlier samples of both medium (145,000) and low (12,000) molecular weight poly(methyl methacrylate).

The cause of UV curing and why it is different in bulk and nanometer sized particles is not well understood. The ultraviolet curing of the surfactant may cause physical changes such as polymerization of the monomer, increased cross-linking in the polymer, which results in passivation of terminal chemical sites on the particles. Normal expectations are that the increased molecular mass upon curing leads to increase surfactant absorbance and a decrease in light emission as seen in the bulk ZnS:Mn powder. It is believed that UV curing is providing surface passivation of the nanocrystals through photopolymerization. The increase in light emission is probably related to decrease of the surface related non-radiative processes. It may be possible to replicate this effect by another surfactant or a purely chemical treatment.

The nanoparticles produced by the methodology comprise doped semiconductor particles of from 20-100Å in size with a coating of surfactant. The thickness of the coating depends on the physical characteristics of the surfactant used, methacrylic acid will provide the thinnest coating (≃ 10Å) with PMMA coatings thicker depending on the type used (>10Å). The particles are doped with approximately 0.1-2.0 % and more in particular with 0.5-1.0% of dopant. A comparison of the properties of the nanocrystalline particles of the nanocrystals with bulk (non quantum sized) doped semiconductor powder is as follows:

| **Mn doped ZnS** | **Processing temperature** | **Mn- concentration** | **External Quantum Efficiency** | **Recombination Decay time** |
|---|---|---|---|---|
| Nanocrys. | Room temp. | 0.5 - 1.0% | 18% | 3 nsec. |
| Bulk | 1100 C | 1.0-2.0% | <20% | 1.7msec. |

Firstly, it is seen that the doped nanocrystals have an efficiency comparable to the bulk, yet they have been processed at room temperature while the bulk samples are annealed at temperatures >1000°C. Secondly, in this size regime (≃33Å) a large percentage of atoms in nanocrystals are surface atoms which contribute to nonradiative recombination; in spite of this, the luminescent efficiency is high in these nanocrystals. The high efficiency of the doped nanocrystals when efficiency would normally be quenched by the nonradiative surface recombination is a unique property of encapsulated doped semiconductors and is not yet completely understood.

Fig. 4 illustrates the luminescent decay characteristics of a doped nanoparticle of the invention. In this test, the particles were illuminated by a short pulse of laser light and the intensity I (arbitrary units) of the light emitted with time in response is measured thereto at the characteristic wavelength of the activator element's (dopant) emission. As is seen in Fig. 4, the majority of the intensity peak is within only a few nanoseconds (<1x10⁻⁸ seconds). A similar response for non-quantum sized powders which are chemically identical with the nanocrystals would be approximately a millisecond (1.7 x 10⁻³ seconds). Put another way, the nanocrystal decay time is 10,000 to 100,000 times faster than the bulk material.

The materials described in this application can be improved by changing the starting compounds and their concentration. Samples with similar chemistries to those described when studied by transmission electron microscopy were about 65Å in size, whereas the best produced by homogeneous precipitation have been about 33Å and thus improvements in size reduction and enhancement of quantum confinement effects are possible. The Grignard exchange reaction to form diethylmanganese at step e may introduce unwanted residual byproducts to the solution. It has been seen in later experiments that the PMMA can be replaced by lower molecular weight polymer and even the methacrylic acid monomer whilst still retaining the quantum confinement of the surfactant. It is also apparent that other surfactants which meet the requirements stated above, may be more effective than those tried here.

In addition to the manganese doping of zinc sulfide the present process is also suitable for doping zinc sulphide with terbium, the starting component of the Grignard reaction is changed to TbCl₃. Additionally, other semiconductor host materials may also be prepared and doped with suitable activators. Such host materials may be zinc selinide (ZnSe), zinc telluride (ZnTe), cadmium sulfide (CdS) and cadmium selinide (CdSe) and may also be created in similar reactions. Organometallic compounds containing these elements are either readily available or can be made by Grignard or other reactions. Finally dopants such as copper, silver, thallium, cerium, chromium, titanium, rare earths and other elements may be utilized.

The organic solvent used in the reaction is Toluene. However, many other pure hydrocarbon solvents are also useable. Such suitable solvents are cyclohexane, hexane, heptane, octane and others. THF was used as the solvent in the Grignard reaction and other organic solvents may also be used. However, THF is known as being particularly effective in promoting Grignard reactions and is also soluble in with the Toluene used in the other reactions.

The above described arrangements and processing steps are merely illustrative of the principles of the present invention.

## Claims

1. An article of manufacture having a layer comprising particles of semiconductor material having a dopant incorporated therein, in which the particles have a size of less than 100 Å, said dopant is a phosphor activator, said particle is a phosphor host and said layer is an electroluminescent layer.

2. A doped particle of semiconductor material of less than 100 Å with a doping % of less than 2%.

3. A doped particle as claimed in Claim 2 wherein said doped particle comprises ZnS.

4. A doped particle as claimed in Claim 2 wherein said doped particle is disposed within a polymer matrix.

5. A doped particle as claimed in Claim 4 wherein said polymer matrix comprises polyethylene oxide.

6. A doped particle as claimed in Claim 2, coated with a surfactant.

7. A doped particle as claimed in Claim 6 wherein said surfactant comprises PMMA.

8. A doped particle as claimed in Claim 6 wherein said particle has been cured by exposure to UV light.

9. A doped particle as claimed in Claim 2, obtained by the steps of:
(a) dissolving a compound containing a first component of a host material, a compound containing a dopant and a matrix forming polymer in a first solvent;
(b)drying said polymer to form a matrix;
(c) immersing said polymer matrix containing said dissolved elements into a second solvent, said second solvent being incapable of dissolving said polymer matrix but capable of dissolving a compound containing the second component of said host material;
(d) dissolving a compound containing the second component of said host material in said second solvent to diffuse through the polymer matrix and to cleave said second component of the host material from said compound and growing said doped nanocrystals within said polymer matrix; and
(e) removing said polymer matrix from said second solvent and drying the matrix.

10. A doped particle as claimed in Claim 2, obtained by the steps of:
(a) dissolving in first organic solvent an organometallic compound containing a the first component of a host material;
(b) dissolving a surfactant in said first organic solvent;
(c) adding an organometallic compound containing a dopant to said first organic solvent;
(d) adding a compound which will provide the second component of the host material; and
(e) triggering the precipitation of doped particles which are coated with the surfactant.
